# EUROPÄISCHE PATENTANMELDUNG

(11) **EP 1 559 584 A2**
(43) Veröffentlichungstag der Anmeldung: **03.08.2005**
(21) Anmeldenummer: 05001545.2
(22) Anmeldetag: 26.01.2005
(51) Int. Cl.: B60B 27/02

(54) **Freilaufnabe mit mehrteiligem Rotor**

(30) Priorität: 27.01.2004 DE 102004004106
(71) Anmelder: DT Swiss AG, 2500 Biel (CH)
(72) Erfinder: Spahr, Stefan, 2543 Lengnau (CH)
(74) Vertreter: Wallinger, Michael, Dr.

(57) **Zusammenfassung**

Feilaufnabe (3) mit mehrteiligem Rotor (5a, 5b), insbesondere für Fahrräder und dergleichen, welche eine Nabenachse (4), ein konzentrisch dazu angeordnetes hohles Nabengehäuse (1), einen konzentrisch zur Nabenachse (4) angeordneten Rotor (5a, 5b), dessen Körper wenigstens aus einem ersten (5a) und wenigstens einem zweiten Bauteil (5b) zusammengesetzt ist und an welchem wenigstens ein Zahnrad angeordnet werden kann, sowie eine Sperrklinken-Freilaufeinrichtung aufweist. Dabei ist an dem Rotor (5a, 5b) wenigstens ein Gleitlager (31) angeordnet, durch welches dieser gegenüber dem Nabengehäuse (1) drehbar gelagert ist.

## Beschreibung

Die vorliegende Erfindung betrifft eine Freilaufnabe, welche insbesondere für Fahrräder geeignet ist. Dies ist aber nicht der einzig mögliche Einsatz, solche Freilaufnaben können auch z. B. als Antrieb für Rollstühle und andere muskelbetriebene oder nicht muskelbetriebene Fahrzeuge und Geräte verwendet werden. Aus Gründen der Vereinfachung wird die Erfindung aber nachfolgend ausschließlich in Bezug auf ihren Einsatz bei Fahrrädern beschrieben, wobei diese Beschreibung nicht für den Anmeldungsbereich einschränkend sein soll.

Freilaufnaben für Fahrräder werden häufig mit einem Klinkenfreilauf ausgeführt, bei welchem beweglich gelagerte Klinken zwischen zwei rotierenden Teilen angeordnet sind und in einer Drehrichtung eine formschlüssige Verbindung zwischen diesen beiden Teilen bewirken und in der anderen Drehrichtung, der Leerlaufrichtung, sich in eine Position bewegen, in der keine Drehmomentenübertragung zwischen den rotierenden Teilen stattfindet.

Die Ausgestaltung einer erfindungsgemäßen Nabe schließt Merkmale mit ein, wie sie in der Offenlegungsschrift DE 198 56 627 A1 desselben Anmelders offenbart werden, deren Inhalt hiermit vollumfänglich in die gegenständliche Offenbarung einbezogen wird.

Insbesondere, aber nicht nur im hochleistungssportlichen Bereich, sind die Anforderungen an Freilaufnaben sehr hoch.

Auf der einen Seite soll die Freilaufnabe auch hohe Kräfte sicher aufnehmen, auf der anderen Seite muss sie, auch über längere Zeiträume, zuverlässig arbeiten.
Weiterhin muss die in der Nabe entstehende Reibung, sowohl im Antriebsbereich als auch im Leerlaufbereich, möglichst gering sein.

Im professionellen und semiprofessionellen Sportbereich ist es üblich, derartige Naben vor jedem oder fast jedem Einsatz zu warten. Es ist deshalb weiterhin erforderlich, dass die Nabe leicht zerlegt und wieder zusammengebaut werden kann.

Zudem müssen die Komponenten der Nabe auch zur Übertragung großer Drehmomente geeignet sein. D.h. es stellen sich hohe Anforderungen an die Festigkeit der Materialien einerseits, andererseits sollte der Materialaufwand bzw. das Gesamtgewicht der Nabe niedrig gehalten werden.

Der vorliegenden Erfindung liegt daher die Aufgabe zugrunde, eine Freilaufnabe, insbesondere für ein Fahrrad, zur Verfügung zu stellen, welche bei geringem Gewicht höchsten Belastungen standhält, geringe Reibungsverluste aufweist, betriebssicher arbeitet und leicht gewartet werden kann.

Diese Aufgabe wird erfindungsgemäß durch den Gegenstand des Anspruchs 1 gelöst. Bevorzugte Ausführungsformen und Weiterbildungen der Erfindung sind Gegenstand der Unteransprüche.

Die vorliegende Erfindung stellt eine Fahrradnabe mit hoher Funktionssicherheit und Belastbarkeit zur Verfügung, welche relativ leicht sowie einfach zu warten ist und bei welcher im Falle der Kraftübertragung eine zuverlässige, haltbare und formschlüssige Verbindung erreicht wird, während z. B. bei einer Talfahrt, wenn die Tretkurbeln stillstehen, die Reibungsverluste klein sind.

Die erfindungsgemäße Nabe weist eine Nabenachse, ein konzentrisch dazu angeordnetes hohles Nabengehäuse, einen konzentrisch zur Nabenachse angeordneten Rotor, dessen Körper wenigstens aus einem ersten und wenigstens einem zweiten Bauteil zusammengesetzt ist und an welchem wenigstens ein Zahnrad angeordnet werden kann, sowie eine Sperrklinken-Freilaufeinrichtung auf, wobei an dem Rotor wenigstens ein Gleitlager angeordnet ist, durch welches der Rotor gegenüber dem Nabengehäuse drehbar gelagert ist.

Der Vorteil der mehrteiligen Ausführung besteht darin, dass eine günstigere Materialanpassung vorgenommen werden kann, d.h. kein einheitliches Material für den gesamten Rotor gewählt werden muss, sondern die Bauteile des Rotorkörpers nach den an sie zu stellenden Anforderungen ausgewählt werden können.

Bevorzugt sind wenigstens zwei Bauteile des Rotorkörpers kraft- und/oder formund/oder stoffschlüssig verbunden. Vorzugsweise weist wenigstens ein Bauteil des Rotorkörpers ein Außengewinde zur schraubbaren Verbindung mit wenigstens einem mit Innengewinde versehenen anderen Bauteil des Rotorkörpers auf. Vorzugsweise sind daher die Bauteile des Rotorkörpers als im Wesentlichen zylinderförmige Ringe ausgestaltet, wobei sie dennoch Strukturierungen, Verbreitungen sowie Absätze und Nuten, insbesondere zum Zusammenwirken mit anderen Nabenkomponenten, aufweisen können.

In einer bevorzugten Weiterbildung der erfindungsgemäßen Nabe ist in wenigstens ein Bauteil des Rotorkörpers wenigstens eine Dichtungseinrichtung integriert. Bevorzugt weist das erste Bauteil des Rotorkörpers auf der Außenumfangsfläche wenigstens eine radiale Nut zur Aufnahme wenigstens einer Dichteinrichtung auf. Vorzugsweise ist die Dichteinrichtung als Dichtring aus einem anschmiegsamen Material wie z. B. Gummi gefertigt und dazu geeignet, den Rotor gegenüber dem relativ zu ihm drehbaren Nabengehäuse abzudichten.

In einer bevorzugten Ausführungsform der erfindungsgemäßen Freilaufnabe weist wenigstens das erste Bauteil des Rotorkörpers ein Material hoher Festigkeit auf. Bevorzugt ist das Material des ersten Bauteils einer Gruppe von Materialien entnommen ist, welche Stahl, Stahlegierungen, gehärteten Stahl, Titan und dergleichen enthält. Demgegenüber weist das zweite Bauteil des Rotorkörpers bevorzugt ein Material geringen spezifischen Gewichts auf. Vorzugsweise ist das Material des zweiten Bauteils einer Gruppe von Materialien entnommen, welche Leichtmetalle, Aluminium, Aluminiumlegierungen, Magnesium und dergleichen enthält.

Die erfindungsgemäße Mehrteiligkeit des Rotorkörpers ist insbesondere insofern vorteilhaft, als den unterschiedlichen, sich mitunter sogar ausschließenden Anforderungen an die Materialeigenschaften eines Rotors Rechnung getragen werden kann. Denn einerseits erfordern die Abschnitte des Rotors, welche das in der Regel von der Kette über ein Zahnrad eingespeiste Drehmoment des Rotors auf das Nabengehäuse und damit in der Regel über Speichen auf ein vorzusehendes Laufrad übertragen, wie z. B. eine Innenverzahnung zur Aufnahme der Sperrklinken, hohe Festigkeit- und Belastbarkeitseigenschaften. Dadurch kann eine kritische Beeinträchtigung dieser Abschnitte unter Einwirkung des Eingriffs der Sperrklinken z. B. durch Abrieb oder Risse abgemildert bzw. vermieden werden.

Danach würden für den Rotor insbesondere Stähle bzw. legierte oder gehärtete Stähle geeignete Eigenschaften bieten. Daher weist bevorzugt das erste Bauteil des Rotorkörpers auf der Innenumfangsfläche wenigstens eine axiale Nut zum Eingriff mit den Sperrklinken der Freilaufeinrichtung auf.

Anderseits herrscht das Erfordernis, das Gewicht der Nabe gering zu halten. Deswegen ist der Rotor bei Naben des Stands der Technik oftmals aus Leichtmetall gefertigt, insbesondere aus Aluminium. Aluminium bildet jedoch durch seine gewisse Sprödigkeit nicht das geeignetste Material für Rotoren, insbesondere nicht für die hochbelastete Innenverzahnung des Rotors. Entsprechend finden im Stand der Technik insbesondere bei Naben, die besonders hohen Belastungen ausgesetzt sind, wie z. B. bei einem Tandem, Stahlrotoren Verwendung.

Der erfindungsgemäß wenigstens zweiteilige Rotor bietet somit unter anderem den Vorteil, die Vorzüge Materialien hoher Festigkeit, die jedoch oftmals ein hohes spezifische Gewicht aufweisen, mit den Materialien geringen spezifischen Gewichts, deren Belastbarkeit meist geringer ist, wie z. B. Aluminium, kombinieren zu können. Dazu ist ein erstes Bauteil des Rotorköpers aus einem Material höherer Festigkeit und Belastbarkeit als derjenige Teil des Rotors vorgesehen, welches das Drehmoment unmittelbar auf das Nabengehäuse überträgt. Vorzugsweise bildet, das erste Bauteil den kleineren Teil des Rotors. Vorzugsweise wird für das bevorzugt kraftschlüssig mit dem ersten Bauteil des Rotorkörpers verbundene zweite Bauteil, welches bevorzugt den Hauptteil des Rotors als Zahnradträger bildet, ein Leichtmetall gewählt, welches insbesondere Aluminium oder Aluminiumlegierungen enthält.

Ferner bildet die erfindungsgemäße Lagerung des Rotors in Bezug auf das Nabengehäuse durch wenigstens ein Gleitlager die Grundlage für viele Vorteile. Aufgrund der einfacheren Struktur eines Gleitlagers im Vergleich zu Wälzlagern, insbesondere Kugellagern, mit weniger beweglichen Teilen sind Gleitlager in der Regel weniger störungsanfällig und wartungsbedürftig, unaufwändiger in der Herstellung und meist einfacher zu montieren.

In einer bevorzugten Ausführungsform ist als Gleitlager ein Kunststoffgleitlager vorgesehen. Vorzugsweise ist das eingesetzte Gleitlager selbstschmierend. Bevorzugt weist das Gleitlager wenigstens teilweise ein Material auf, das einer Gruppe von Materialien entnommen ist, welche faserverstärkten Kunststoff, Polytetrafluorethylen, ultrahochmolekulares Niederdruck-Polyethylen, Polyamid und dergleichen enthält.

Gleitlager bieten die Möglichkeit, wenigstens als Lagerkomponente Kunststoffe einzusetzen, welche einerseits leicht sind und damit das Gewicht gegenüber üblicherweise verwendeten metallischen Wälzlagern reduzieren. Anderseits weisen gewisse Kunststofftypen wie z. B. faserverstärkte Kunststoffe, Polytetrafluorethylen oder Polyamide hohe Festigkeit, geringen Abrieb und selbstschmierende Eigenschaften auf, wodurch sie sich zudem als hoch belastbare, wartungsfreie Lagerkomponente eignen.

Der Einsatz des Gleitlagers an einer Stelle, wo üblicherweise nur Wälzlager verwendet werden, hat weiterhin den Vorteil, dass die Belastung sich auf eine größere Lagerfläche verteilt und somit das Gleitlager gegenüber einem vergleichbaren Wälzlager kleinere Außendurchmesser aufweist. Eine Verringerung des Außendurchmessers des Lagers führt zu einem geringeren Materialvolumen und somit geringerem Gesamtgewicht der Nabe. Dies ist insbesondere, aber nicht nur, im Sportbereich sehr wichtig.

Ferner wirkt das Gleitlager, insbesondere ein Kunststoffgleitlager, in besonders vorteilhafter Weise mit dem mehrteiligen Rotor zusammen, da vermieden werden kann, dass durch den Einsatz schwererer Wälzlager eine axiale und radiale Massekonzentration zusammen mit dem ersten Stahl-Bauteil des Rotorkörpers, an welchem das Lager befestigt ist, entstünde. Gegenüber den wesentlichen äußeren Nabenkomponenten wie Nabengehäuse und Zahnkradträger, d.h. dem zweiten Bauteil des Rotorkörpers, für die üblicherweise Leichtmetalle eingesetzt werden, bildeten Wälzlager und Stahl-Bauteil des Rotorkörpers durch ihre konzentrierte Lage bzw. Massekonzentration und axial sowie radial vergleichsweise geringe räumliche Ausdehnung damit eine Störung einer anzustrebenden möglichst gleichmäßigen axialen und radialen Masseverteilung der Nabe. Insbesondere durch ein leichtes Gleitlager wie z. B. ein Kunststoffgleitlager kann somit verhindert werden, dass durch ein ausgeprägtes Trägheitsmomentsmaximum in axialer Richtung Torsionsbeanspruchungen der Nabenkomponenten entstünden.

Zudem fällt durch ein Kunststoffgleitlager zur Lagerung des Rotors gegenüber dem Nabengehäuse, welches in der Regel radial relativ weit beabstandet von der Nabenachse angeordnet ist und daher stark zum Gesamtträgheitsmoment der Nabe beiträgt, dieser Beitrag im Vergleich zu einem Stahlwälzlager geringer aus. D.h. es muss weniger Energie zur Drehbeschleunigung der Nabe aufgebracht werden, welche dafür der Nutzvortriebsbeschleunigung des mit der Nabe verbundenen Rads zur Verfügung steht.

Zur Lagerung des Nabengehäuses und des Rotors gegenüber der Nabenachse werden Wälzlager eingesetzt. Die Wälzkörper eines bzw. jedes Wälzlagers sind in einem vorbestimmten Abstand zueinander aufgerichtet. Vorzugsweise werden z. B. nach DIN oder ISO normierte bzw. industriell hergestellte Wälzlager verwendet. Mit solchen Wälzlagern kann eine aufwendige und fehleranfällige Einstellung des Lagerspiels unterbleiben. In der Fahrradbranche sind solche Wälzlager auch unter dem Begriff "Industrielager" bekannt, da solche Lager üblicherweise industriell und genormt hergestellt werden.

Der Einsatz von Wälzlagern oder Industrielagern zur Lagerung des Nabengehäuses hat Vorteile, da üblicherweise der Qualitätsstandard solcher industriell gefertigter Lager durch die hohe Stückzahl bedingt sehr hoch ist. Bei eventuellem Verschleiß eines Lagers kann das defekte Lager einfach und schnell ausgetauscht werden. Durch den Einsatz genormter Lager ist es nahezu auf der ganzen Welt möglich, hochqualitativen Ersatz schnell und kostengünstig zu erhalten.

Weiterhin weist eine erfindungsgemäße Hinterradnabe eine mit Sperrklinken versehene Freilaufeinrichtung auf, welche derart gestaltet ist, dass ein Drehmoment dieses Rotors in Vorwärtsfahrtrichtung auf das Nabengehäuse übertragen wird, wobei die Freilaufeinrichtung im Wesentlichen radial aufgebaut ist, so dass durch eine Stellungsveränderung der Sperrklinken ein Kraft- bzw. Formschluss zwischen Rotor und Nabengehäuse erzielt wird.

In einer weiteren bevorzugten Ausgestaltung der erfindungsgemäßen Fahrradnabe weist die Nabe eine hohle Nabenachse auf, die im Unterschied zu konventionellen Nabenachsen derart gestaltet ist, dass das Verhältnis bzw. die Differenz von Außenund Innendurchmesser klein ist bzw., dass die Wandstärke der hohlen Nabenachse relativ gering ist, bevorzugterweise zwischen 0,5 und 3 mm und besonders bevorzugt zwischen 1,7 und 2, 3 mm bei etwa 2 mm liegt, wodurch eine weitere Einsparung an Gewicht ermöglicht wird.

Weiterhin ist es möglich, eines oder mehrere der zur Lagerung verwendeten Wälzlager schwimmend und insbesondere axial schwimmend zu lagern, wobei die Passgenauigkeit der schwimmenden Lagerung zwischen 0,02 und 0,5 mm, vorzugsweise zwischen 0,05 und 0,15 und besonders bevorzugt etwa 0,1 mm beträgt. Wenn zwei benachbarte Wälzlager zur Lagerung eingesetzt werden, wird besonders bevorzugt eines der beiden schwimmend gelagert.

Vorzugsweise wird wenigstens auf einer Seite der Nabe wenigstens ein Lager schwimmend gelagert, und besonders bevorzugt werden die von der Nabenmitte aus gesehen äußeren Wälzlager schwimmend gelagert, um dauerhafte Verspannungen im Lager zu vermeiden.

In einer bevorzugten Weiterbildung der erfindungsgemäßen Fahrradnabe weist wenigstens eines der vorgefertigten Wälzlager Dichtungen zum Schutz vor Staub bzw. Wasser auf. Bevorzugt sind die Wälzlager zur Lagerung des Nabengehäuses und des Rotors in Bezug auf die Nabenachse mit Dichtungen zum Schutz vor Staub und/oder Wasser ausgerüstet, und besonders bevorzugt sind alle eingesetzten Wälzlager mit Dichtungen für Staub und Wasser ausgerüstet. Besonders bevorzugt werden genormte, abgedichtete Wälzlager eingesetzt.

Vorzugsweise werden im Wesentlichen wartungsfreie Wälzlager eingesetzt. Der Einsatz von wartungsfreien und/oder abgedichteten Wälzlagern ist besonders vorteilhaft, da die Lebensdauer der Lager erhöht wird und die Nabe dem Benutzer zuverlässiger zur Verfügung steht.

In einer vorteilhaften Weiterbildung der erfindungsgemäßen Nabe ist ein bzw. sind alle eingesetzten Wälzlager Rillenkugellager, die gemäß einer Weiterbildung als wartungsfreie und abgedichtete Rillenkugellager ausgeführt sein können. Der Einsatz von Rillenkugellagern ist besonders vorteilhaft, da diese Kugellager neben Radial- auch Axialkräfte aufnehmen können.

In einer anderen bevorzugten Weiterbildung der erfindungsgemäßen Nabe werden neben Rillenkugellagern auch ein oder mehrere Nadellager eingesetzt.

Vorzugsweise werden zur Lagerung des Nabengehäuses und des Rotors gegenüber der Nabenachse Rillenkugellager eingesetzt.

In einer bevorzugten Weiterbildung der erfindungsgemäßen Fahrradnabe ist eine Freilaufträgereinrichtung vorgesehen, die mit dem Nabengehäuse fest verbunden ist. Das Nabengehäuse ist aus Metall, bevorzugt aus Leichtmetall und besonders bevorzugt aus einer Aluminiumlegierung oder einem ähnlichen Leichtmetall gefertigt. Die Freilaufträgereinrichtung ist ein bezüglich des Rotors separates Bauteil, welches vorzugsweise ebenfalls aus Metall, Leichtmetall, einer Aluminiumlegierung, aber besonders bevorzugt aus gehärtetem Stahl oder ähnlichem gefertigt ist.

In einer bevorzugten Weiterbildung ist die Freilaufträgereinrichtung im Wesentlichen zylindrisch geformt und weist eine durchgehende Bohrung auf. An dem zum Nabengehäuse ausgerichteten Ende weist die Freilaufträgereinrichtung in einem Querschnitt senkrecht zur Nabenachse ein polygonartiges Außenquerschnittsprofil auf. An diesem Ende ist der Außendurchmesser dieser Freilaufeinrichtung abhängig vom Umfangswinkel. In Achsrichtung auf das Ende der Freilaufträgereinrichtung gesehen kann dieses ein zahnradähnliche Form aufweisen, deren Zähne oder Zacken spitz oder rund oder sinusförmig gestaltet sind. Besonders bevorzugt werden mehrere, insbesondere 9 radiale Ausbuchtungen symmetrisch über den Umfangswinkel verteilt angeordnet.

Bevorzugterweise weist das Nabengehäuse an einem Abschnitt auf der Seite des Rotors in einem Querschnitt senkrecht zur Nabenachse eine polygonartig geformte Aussparung auf, die zur im Wesentlichen formschlüssigen Aufnahme des polygonartig geformten Endes der Freilaufträgereinrichtung dient. Je nach Gestaltung des polygonartigen Endes der Freilaufträgereinrichtung ist die Aussparung in dem Nabengehäuse so gestaltet, dass eine drehfeste und im Wesentlichen spielfreie und formschlüssige Verbindung zwischen Freilaufträgereinrichtung und Nabengehäuse möglich ist.

In einer weiteren bevorzugten Ausbildung der erfindungsgemäßen Nabe ist eine Schraubeinrichtung vorgesehen, die eine Schraube aufweist, welche eine durch Schraubenkopf und Schraubenschaft durchgehende Bohrung aufweist. Wenigstens am vom Schraubenkopf abgewandten Ende des Schraubenschafts ist auf dem Schraubenschaft ein (Außen-) Gewinde vorgesehen, welches mit einem (Innen-) Gewinde der Freilaufträgereinrichtung auf der der Nabenmitte zugewandten Seite verschraubbar ist. Zur Montage wird die Freilaufträgereinrichtung in das Nabengehäuse eingeschoben.

Durch die polygonartigen Außen- und Innenprofile der Freilaufträgereinrichtung und des Nabengehäuses entsteht eine drehfeste und formschlüssige Verbindung von Freilaufträgereinrichtung und Nabengehäuse. Von der der Freilaufträgereinrichtung abgewandten Seite des Nabengehäuses wird durch dessen hohles Innere die Schraube der Schraubeinrichtung eingeführt und durch eine dem Schraubenschaftdurchmesser entsprechende Bohrung in dem Nabengehäuse in die Freilaufträgereinrichtung eingeführt und die Schraube wird mit der Freilaufträgereinrichtung verschraubt. Der Schraubenkopf liegt im erfindungsgemäßen Zusammenbau an einem Absatz im Nabengehäuse an, so dass eine kraftschlüssige Verbindung in axialer Richtung zwischen Freilaufträgereinrichtung und Nabengehäuse vorliegt.

Der Schraubenkopf weist Aussparungen oder Vorsprünge auf, damit er mit einem Werkzeug gedreht werden kann.

In einer weiteren bevorzugten Weiterbildung der erfindungsgemäßen Nabe weist die Freilaufeinrichtung wenigstens eine Sperrklinke auf, die auf der Freilaufträgereinrichtung angeordnet ist und zum Zwecke der Drehmomentübertragung in eine Nut oder eine entsprechende Verzahnung auf der Innenumfangsoberfläche des ersten Bauteils des Rotorkörpers eingreift. Bevorzugterweise ist die Verzahnung des ersten Bauteils des Rotorkörpers derart gestaltet, dass, in Umfangsrichtung gesehen, jeder Zahn der Verzahnung eine langsam ansteigende Flanke aufweist, welche an der Spitze des Zahns dann steil abfällt.

Wenn Drehmoment übertragen wird, greifen die vorzugsweise zwei, drei oder vier oder auch mehr Sperrklinken der Freilaufträgereinrichtung in die Verzahnung des Rotors ein und übertragen von der steilen Flanke der Verzahnung das Antriebsdrehmoment auf die Freilaufträgereinrichtung und von dort auf das Nabengehäuse. Wenn beim Fahren die Tretkurbeln stillstehen, gleiten die Sperrklinken über die flachen Flanken der Verzahnung, und es wird kein Drehmoment übertragen.

Bevorzugterweise sind auf einem zentralen Abschnitt der Freilaufträgereinrichtung in Umfangsrichtung verteilt wenigstens eine der Klinkenzahl entsprechende Anzahl von Vertiefungen angeordnet, die zur Aufnahme der Sperrklinken dienen, und welche vorzugsweise kreis- oder zylinderförmig geformt sind.

Die Sperrklinken weisen ein entsprechend geformtes Ende auf und sind in den entsprechenden Vertiefungen derart angeordnet, dass sie mit ihrem zweiten eingreifenden Ende in die Verzahnung auf der Innenumfangsoberfläche des Rotors eingreifen können.

Der zentrale Abschnitt der Freilaufträgereinrichtung, auf welchem die Freilaufeinrichtung angeordnet ist, weist bevorzugterweise eine Nut in Umfangsrichtung auf, in welcher eine Ringfeder angeordnet ist, welche die Freilaufelemente oder Sperrklinken derart belastet, dass die Eingriffsenden der Sperrklinken aufgerichtet werden, um sie in Eingriff mit der Verzahnung des Rotors bringen. Bevorzugterweise ist die Feder als Q-Feder ausgeführt und umschließt die Freilaufträgereinrichtung mit einem Winkel von mehr als 360°. An einem Ende der ring- bzw. Q-förmigen Feder kann ein kleines Endstück um 90° umgebogen sein, welches dann im bestimmungsgemäßen Zusammenbau der Nabe im Wesentlichen parallel zur Achse ausgerichtet ist und gegebenenfalls in eine axiale Ausbuchtung der Freilaufträgereinrichtung hineinragt, um sie in Umfangsrichtung zu fixieren. Auch der Einsatz einer C-förmigen Feder ist möglich.

Benachbart zu diesem zentralen Abschnitt der Freilaufträgereinrichtung in Richtung auf das Nabengehäuse kann ein zylindrischer Bereich größeren Durchmessers an der Freilaufträgereinrichtung angeordnet sein, der die Lauffläche für das an einem Rotorkörperbauteil angeordnete Gleitlager bildet, um das die Freilaufträgereinrichtung umgebende Rotorkörperbauteil in Bezug auf die Freilaufträgereinrichtung und somit das Nabengehäuse drehbar zu lagern. Vorzugsweise ist die Lauffläche für das Gleitlager eine zylindrische glatte Fläche, welche zu Verringerung von Reibung und Abrieb mit abriebfesten und/oder reibungsreduzierenden Stoffen wie Chrom, Nickel, Titan-Nitrid, Polytetrafluorethylen und dergleichen beschichtet sein kann.

Bevorzugt ist nahe dem, dem Nabengehäuse abgewandten, Ende des anderen Rotorkörperbauteils ein Wälzlager im Wesentlichen zwischen diesem Bauteil des Rotorkörpers und der Nabenachse angeordnet, um den Rotor in Bezug auf die Nabenachse drehbar zu lagern.

Eine solche Lagerungsanordnung, bei welcher der von den Rotorkörperbauteilen gebildete Rotor auf der einen Seite der Freilaufeinrichtung gegenüber dem Nabengehäuse und auf der anderen Seite der Freilaufeinrichtung gegenüber der Nabenachse drehbar gelagert ist, ist besonders vorteilhaft, da auch bei großen Drehmomentbelastungen des Rotors, z. B. bei Bergfahrten eine stärkere Durchbiegung des Rotors gegenüber dem Nabengehäuse bzw. der Freilaufträgereinrichtung nahezu ausgeschlossen ist. Eine solche Durchbiegung kann eine einseitige Belastung der Freilaufelemente bzw. der Sperrklinken der Freilaufeinrichtung hervorrufen, die dadurch einem stark erhöhten Verschleiß unterliegen.

Mit einer solch stabilen Lagerung ist es im Wesentlichen immer gewährleistet, dass ein auf den Rotor übertragenes Drehmoment zuverlässig auf das Nabengehäuse übertragen wird. Bei größerer Durchbiegung des Rotors in Bezug auf das Nabengehäuse und/oder auf die Freilaufeinrichtung kann es sonst passieren, dass, insbesondere bei Kurvenfahrten, die Freilaufelemente oder die Sperrklinken der Freilaufeinrichtung kein Drehmoment auf das Nabengehäuse übertragen können.

Die erfindungsgemäße Nabe hat u. a. den Vorteil, ein Drehmoment des Rotors in nahezu allen denkbaren Fahrsituationen zuverlässig zu übertragen.

Bevorzugt ist an der, der Nabenmitte abgewandten Seite der Freilaufträgereinrichtung, ein Wälzlager angeordnet, um die Freilaufeinrichtung in Bezug auf die Nabenachse drehbar zu lagern.

In einer bevorzugten Weiterbildung der erfindungsgemäßen Nabe sind die Wälzlager zur Lagerung des Rotors gegenüber der Achse und zur Lagerung der Freilaufeinrichtung in Bezug auf die Nabenachse direkt benachbart angeordnet. Die besagten Wälzlager können jedoch auch durch eine Art Unterlegscheibe, einen Federring oder dergleichen getrennt sein.

In einer bevorzugten Weiterbildung der erfindungsgemäßen Nabe ist die Nabe im Wesentlichen ohne Verwendung von Werkzeug zerlegbar und es ist weiterhin möglich, den Rotor ebenfalls bevorzugt ohne Verwendung von Werkzeug mit der Hand von der Nabe abzuziehen bzw. zu entfernen.

Zu diesem Zweck werden auf beide Endseiten der Nabenachse Endsicherungselemente aufgebracht, die auf die Nabenachse aufgeschraubt oder auch nur aufgesteckt sein können.

Falls die Nabenendsicherungselemente aufgeschraubt werden, weisen sie vorzugsweise ein Innengewinde auf und die Endstücke der Nabenachse haben ein Außengewinde. Zur Demontage der Nabe kann dann vorzugsweise ein Werkzeug verwendet werden, um diese Nabenendsicherungselemente abzuschrauben.

Falls die Nabenendsicherungselemente aufgesteckt sind, können diese von Hand abgezogen werden.

Die weitere Demontage der Nabe kann immer im Wesentlichen ohne Werkzeug erfolgen. Der Rotor ist bevorzugterweise in allen Ausführungsformen mit der Hand abziehbar und somit ist der vom Rotor umschlossene Innenraum, wie z. B. die Freilaufeinrichtung für Säuberungs- und Wartungsarbeiten leicht und einfach zugänglich. Besonders vorteilhaft ist dabei, dass nach Abzug des Rotors keine Wälzkörper wie z. B. Kugeln oder auch Sperrklinken aus der Nabe herausfallen können.

In einer bevorzugten Weiterbildung der erfindungsgemäßen Nabe ist auf der rechten Seite des Nabengehäuses, auf der der Rotor angeordnet ist, ein Nabenendsicherungselement in Form eines rechten Adapterrings mit einer vorzugsweise V-förmigen Dichtungseinrichtung auf die Nabenachse aufgeschoben, wobei sich ein Ende bzw. eine Dichtwandung der V-förmigen Dichtungseinrichtung an einer Staubschutzscheibe des Rotors abstützt.

Auf der linken Seite des Nabengehäuses ist vorzugsweise ein Nabenendsicherungselement in Form eines linken Adapterrings mit einer Dichtungseinrichtung auf die Nabenachse aufgeschoben. Ein Ende der V-förmigen Dichtungseinrichtung stützt sich an dem Nabengehäuse und/oder einem Wälzlager, welches zur Lagerung des Nabengehäuses gegenüber der Nabenachse auf der linken Seite dient, ab, um Eindringen von Staub und/oder Wasser in das innere der Nabe zu verhindern.

Weiterhin ist vorzugsweise an der rechten Innenseite des Nabengehäuses, auf der Seite, an welcher der Rotor angeordnet ist, entlang der Innenumfangsoberfläche des Nabengehäuses eine ringförmige Vertiefung oder Nut angeordnet, weiche in einem Querschnitt parallel zur Nabenachse eine abgerundete Form aufweist, die derart gestaltet ist, dass der Durchmesser am rechten Ende des Nabengehäuses kleiner ist als der maximale Durchmesser dieser Vertiefung.

Vorzugsweise ist im Wesentlichen zwischen dem Rotor und dem Nabengehäuse eine Dichtungseinrichtung angeordnet, welche vorzugsweise wenigstens teilweise aus einem elastischen Material besteht und welche den Eintritt von Schmutz und/oder Wasser in diese Nabe weitgehend verhindert.

Diese Dichtungseinrichtung ist vorzugsweise auf einer Außenfläche des Rotors angeordnet. Besonders bevorzugt ist diese Dichtungseinrichtung in einem Bereich der ringförmigen Vertiefung des Nabengehäuses angeordnet und derart gestaltet, dass eine Belastung von außen eine Erhöhung der Dichtungswirkung hervorruft.

Eine solche Gestaltung ist besonders vorteilhaft, da die Dichtungswirkung mit zunehmender Belastung stärker wird und so eine effektivere Dichtungswirkung möglich wird, ohne die Reibungsverluste im Normalbetrieb zu erhöhen.

Gemäß einer weiteren bevorzugten Weiterbildung der erfindungsgemäßen Nabe ist die Dichtungseinrichtung zwischen Rotor und Nabengehäuse V-förmig gestaltet und derart angeordnet, dass die Spitze der V-förmigen Dichtungseinrichtung zur Nabenmitte ausgerichtet ist, so dass die Öffnung des Vs radial nach außen zeigt.

Bevorzugterweise liegt eine erste Dichtwandung der zwischen Rotor und Nabengehäuse angeordneten V-förmigen Dichtung an dem Rotor an, und die zweite Dichtwandung ragt in die ringförmige Vertiefung des Nabengehäuses hinein und kann die ringförmige Vertiefung berühren.

Eine solche Gestaltung hat erhebliche Vorteile, da die Dichtung bei Belastung durch Spritzwasser von außen ihre Dichtwirkung automatisch verstärkt, da die beiden Dichtwandungen der bevorzugterweise wenigstens teilweise aus elastischen Material bestehenden V-förmigen Dichtungen auseinandergedrückt werden und somit die zweite Dichtwandung dann gegen die ringförmige Vertiefung im Nabengehäuse gedrückt oder gepresst wird.

Dadurch wird eine Erhöhung der Dichtwirkung dieser Dichteinrichtung erzielt, während im Normalzustand die Reibungsverluste durch die Dichtung klein gehalten werden.

In einer bevorzugten Weiterbildung aller bisher beschriebenen Weiterbildungen weist die erfindungsgemäße Freilaufnabe wenigstens eine Labyrinthdichtung auf. Bevorzugt ist die Labyrinthdichtung als zusätzliche Dichteinrichtung vorgesehen und vorzugsweise ist sie einer elastischen Dichtungseinrichtung vorgeschaltet.

Besonders bevorzugt wird eine zusätzliche Labyrinthdichtung auf der linken Nabenseite bei der Dichtungseinrichtung zwischen Nabenachse und Nabengehäuse eingesetzt; eine zusätzliche Labyrinthdichtung kann jedoch auch auf der rechten Nabenseite bei der Dichtungseinrichtung von Nabenachse gegenüber Rotor und bei der zuletzt beschriebenen Dichtungseinrichtung zwischen Rotor und Nabengehäuse angeordnet sein.

Weitere Vorteile, Merkmale und Anwendungsmöglichkeiten der vorliegenden Erfindung ergeben sich aus den nachfolgenden Beschreibungen von Ausführungsbeispielen mit den Zeichnungen.

Darin zeigt:
- Fig. 1: ein Ausführungsbeispiel einer erfindungsgemäßen Nabe;
- Fig. 2: das Ausführungsbeispiel aus Fig. 1 im Querschnitt entlang der Schnittlinie A-A.

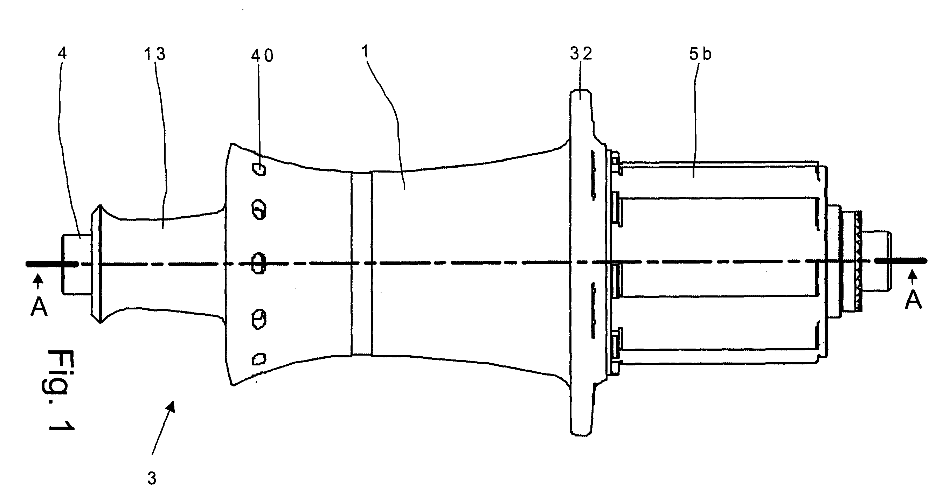

Fig. 1 zeigt ein Ausführungsbeispiel der erfindungsgemäßen Nabe 3. Die Nabe 3 weist eine Nabenachse 4, ein Nabengehäuse 1 und einen zweiteiligen Rotor 5a, 5b auf, wobei in der Darstellung in Fig. 1 nur das zweite Bauteil 5b des Rotorkörpers sichtbar ist. Das Nabengehäuse 1 ist mit radialen Bohrungen 40 sowie Flanschen 32 versehen, welche ebenfalls in axiale Richtung Bohrungen (nicht sichtbar) zur Aufnahme von Speichen aufweisen. Die Begriffe axial und radial beziehen sich wie im Rest dieser Schrift auf die Nabenachse 4.

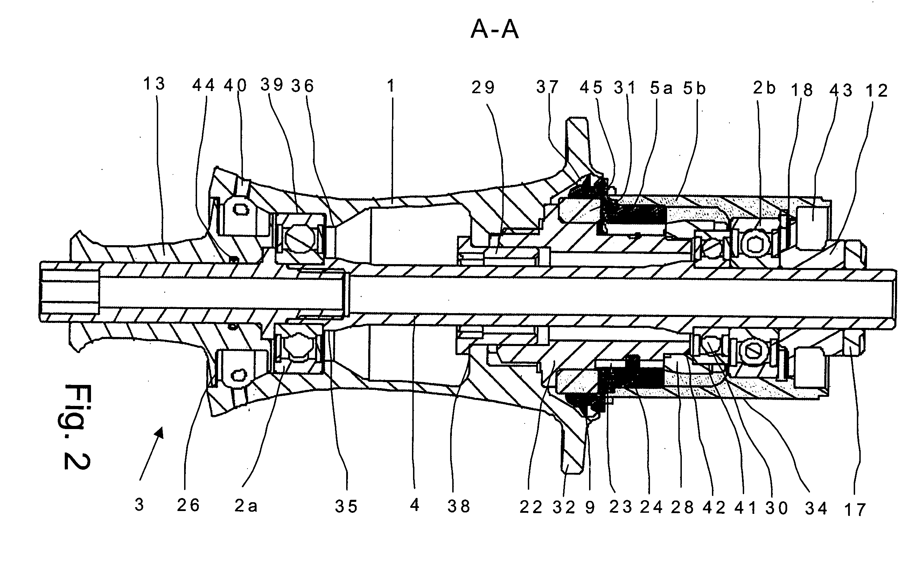

In Fig. 2 ist das Ausführungsbeispiel der erfindungsgemäßen Nabe 3 aus Fig. 1 im Schnitt entlang der Schnittlinie A-A dargestellt. Bei praktisch allen Fahrrädern ist das Ritzel für den Antrieb bzw. das Ritzelpaket für eine Kettenschaltung an der in Fahrtrichtung rechten Seite des Rades angeordnet. Dementsprechend wird hier im Folgenden auch vom linken und vom rechten Teil der Nabe gesprochen, wobei die Orientierung der Fig. 2 entspricht.

Das mit einer durchgehenden axialen Bohrung versehene Nabengehäuse 1 weist in einem linken Bereich eine zur Nabenachse 4 konzentrische Bohrung auf, in der an einem Absatz 36 im Nabengehäuse ein Lagersitz 39 angeordnet ist. Der Lagersitz 39 dient zur Aufnahme eines linken Rillenkugellagers 2a, welches zur Nabenmitte hin durch den Absatz 36 im Nabengehäuse axial abgestützt wird. Die innere Lauffläche des linken Rillenkugellagers 2a ist auf der Nabenachse 4 angeordnet und wird axial nach rechts durch einen Absatz 35 auf der Nabenachse 4 abgestützt. Aufgrund der begrenzten Auflösung der Figuren im elektronischen Ausgangsformat erscheinen in Wirklichkeit idealrunde Teile, wie z. B. die im Querschnitt erkennbaren Kugeln der Rillenkugellager in den beiliegenden Figuren nicht idealrund.

Links neben dem linken Rillenkugellager 2a in der linken Nabenhälfte ist ein linkes Nabenendsicherungselement in der Form eines linken Adapterrings 13 angeordnet, der zur Anpassung an verschiedene Fahrradrahmentypen ausgewechselt werden kann. Eine zylindrische Fläche im rechten Endbereich des linken Adapterrings 13 dient zur Aufnahme eines Dichtringes 26 aus einem elastischen Material, um den Eintritt von Wasser und Staub in das Nabengehäuse 1 zu verhindern.

Auf der rechten Seite der Nabe 3 ist ein Klinkenträger 22 angeordnet, welcher über eine Schraube 29 in fester Verbindung mit dem Nabengehäuse 1 steht.

Bei der Montage wird von rechts der Klinkenträger 22 in das Nabengehäuse 1 eingeführt, und von links wird die Schraube 29 durch die Bohrung im Nabengehäuse 1 durchgesteckt. Das Außengewinde der Schraube 29 wird mit dem Innengewinde des Klinkenträgers 22 auf der linken Seite des Klinkenträgers 22 verschraubt. Der Schraubenkopf der Schraube 29 stützt sich gegen einen Absatz 38 im Nabengehäuse 1 ab.

In einem linken Bereich des Klinkenträgers 22 ist die Lauffläche für das Kunststoffgleitlager 31 angeordnet, um das aus Stahl gefertigte erste Bauteil 5a des Rotorkörpers in Bezug auf den Klinkenträger 22 drehbar zu lagern. In einem rechten achsenabgewandten Endbereich des ersten Rotorkörper-Bauteils 5a ist ein Außengewinde vorgesehen, auf welches das aus Aluminium gefertigte, zweite Bauteil 5b des Rotorkörpers mit dem in seinem linken Endbereich vorgesehenen Innengewinde im Wesentlichen drehfest aufgeschraubt ist.

In einem Bereich rechts des Gleitlagers 31 sind über den äußeren Umfang des Klinkenträgers Sperrklinken 23 bevorzugt symmetrisch verteilt, welche mit Nuten im ersten Bauteil 5a des Rotorkörpers in Eingriff stehen können, um ein Drehmoment des Rotors 5a, 5b auf den Klinkenträger 22 und somit das Nabengehäuse 1 zu übertragen.

Im Bereich der Sperrklinken 23 ist eine zentral bzw. mittig ringförmige Feder 24 angeordnet, die mit einem Winkel von mehr als 360° den Klinkenträger 22 mit den darauf befindlichen Sperrklinken 23 umschließt und die Sperrklinken 23 derart belastet, dass das freie Ende der Sperrklinken 23 aufgerichtet wird und in eine Eingriffsstellung mit den Nuten im ersten Bauteil 5a des Rotorkörpers gelangt.

Rechts von den Sperrklinken 23 ist an einem Bereich des Sperrklinkenträgers 22 ein Ring 28 auf den Sperrklinkenträger 22 geschraubt. Der Ring 28 weist einen inneren Lagersitz 41 auf, in dem ein Rillenkugellager 30 angeordnet ist, um den Klinkenträger 22 in Bezug auf die Nabenachse 4 drehbar zu lagern. Zur axialen Fixierung weist die Nabenachse 4 in dem Bereich des Lagersitzes 41 einen Absatz 42 entsprechend dem Absatz 35 auf der linken Nabenseite auf. An das Rillenkugellager 30 schließt sich ein rechtes Rillenkugellager 2b an, welches das zweite Bauteil 5b des Rotorkörpers und damit den ganzen Rotor 5a, 5b in Bezug auf die Nabenachse 4 drehbar lagert. Der rechte Adapterring 12 sichert die äußeren Lagerschalen der Rillenkugellager 2b und 30 auf der rechten Seite vor einer axialen Verschiebung.

Zum Schutz vor Staub und Wasser ist im linken sich radial von der Nabenachse weg erstreckenden Bereich des rechten Adapterrings 12 eine schmaler zylinderförmiger Einschnitt vorgesehen, in welchem ein schmaler Dichtring 18 angeordnet ist, dessen V-förmiger radial äußerer Endabschnitt im berührenden Kontakt mit dem zweiten Bauteil 5b des Rotorkörpers endet. Rechts des Dichtrings 18 ist diesem zur weiteren Abdichtung eine Labyrinthdichtung 43 vorgeschaltet.

Auf der rechten Nabenseite bildet eine Riffel- oder Rändelscheibe 17 den Abschluss der Nabenachse 4, welche auf deren rechten Endbereich aufgeschraubt ist.

Der linke Adapterring 13 weist eine Nut entlang der inneren Umfangsfläche auf, die genau zu einer Nut entlang der äußeren Umfangsfläche der Nabenachse 4 ausgerichtet ist. Ein in beiden Nuten angeordneter O-Ring 44 aus elastischem Material bewirkt einerseits, dass der Adapterring 13 ohne Einsatz von Werkzeug mit der Hand von der Nabenachse 4 abgezogen werden kann und andererseits, dass sich der linke Adapterring 13 nicht ungewollt von der Nabenachse 4 löst oder auf dieser verschiebt.

Auch auf der rechten Seite der Nabe 3 ist deren Demontage zu Wartungszwecken nach Entfernen der Riffel- oder Rändelscheibe 17 ohne weiteren Einsatz von Werkzeug möglich.

Am rechten Ende des Nabengehäuses 1 ist eine Nut 37 entlang der Innenumfangsoberfläche des Nabengehäuses 1 angeordnet, welche in dem in Fig. 2 dargestellten Schnitt eine abgerundete Form aufweist. In einer radial umlaufenden Nut 45 auf Außenoberfläche des linken Endbereichs des ersten Rotorkörper-Bauteils 5a ist ein ebenfalls V-förmiger Dichtungsring 9 angeordnet. Die Öffnung des V des Dichtrings 9 ist axial ausgerichtet und weist von der Nabenmitte weg.

Die Nut 37 und der Dichtring 9 sind derart gestaltet, dass nur ein enger Spalt zwischen Nabengehäuse 1 und erstem Rotorkörperbauteil 5a verbleibt. Bei Eintritt von z. B. Wasser durch diesen schmalen Spalt wird die radial nach außen weisende Dichtwandung der V-förmigen Dichtung 9 radial nach außen und somit gegen die umlaufende Nut 37 gedrückt. Dies bedeutet, dass bei Eintritt von Wasser oder auch Staub die Dichtungswirkung des Dichtrings 9 automatisch verstärkt wird, da ein Eintritt von Wasser eine Spreizung der beiden Dichtwandungen des Dichtrings 9 bewirkt und somit eine verstärkte Dichtwirkung.

### Bezugszeichenliste

- 1: Nabengehäuse
- 2a: linkes Rillenkugellager
- 2b: rechtes Rillenkugellager
- 3: Nabe
- 4: Nabenachse
- 5a: erstes Rotorkörperbauteil
- 5b: zweites Rotorkörperbauteil
- 9: Dichtung
- 12: rechter Adapterring
- 13: linker Adapterring
- 17: Rändelscheibe
- 18: Dichtung
- 22: Sperrklinkenträger
- 23: Sperrklinke
- 24: Ringfeder
- 26: Dichtung
- 28: Lagerträger
- 29: Schraube
- 30: Rillenkugellager
- 31: Kunststoffgleitlager
- 32: Flansch
- 34: Aufnahmefläche für Zahnkränze
- 35: Absatz
- 36: Absatz
- 37: Nut
- 38: Absatz
- 40: Bohrung
- 41: Lagersitz
- 42: Absatz
- 43: Labyrinthdichtung
- 44: O-Ring
- 45: Nut

## Patentansprüche

1. Freilaufnabe (3), insbesondere für ein Fahrrad, mit:
einer Nabenachse (4),
einem im Wesentlichen konzentrisch zur Nabenachse (4) angeordnetem Nabengehäuse (1),
wenigstens einem Wälzlager (2a, 30) zur Lagerung des Nabengehäuses (1) wobei das Nabengehäuse (1) in Bezug auf die Nabenachse (4) drehbar gelagert ist,
einem im Wesentlichen konzentrisch und drehbar zu dieser Nabenachse (4) angeordnetem Rotor (5a, 5b) zur Aufnahme wenigstens eines Zahnrades,
wobei an dem Rotor (5a, 5b) wenigstens ein Gleitlager (31) angeordnet ist, durch welches der Rotor (5a, 5b) gegenüber dem Nabengehäuse (1) in wenigstens einer Drehrichtung drehbar gelagert ist,
einer mit Sperrklinken (23) versehenen Freilaufeinrichtung, welche derart gestaltet ist, dass bezüglich einer Drehrichtung des Rotors (5a, 5b) ein Drehmoment auf das Nabengehäuse (1) übertragen wird,
wobei der Körper des Rotors (5a, 5b) aus wenigstens einem ersten (5a) und wenigstens einem zweiten Bauteil (5b) zusammengesetzt ist.

2. Freilaufnabe (3) nach Anspruch 1, **dadurch gekennzeichnet, dass** in wenigstens ein Bauteil (5a, 5b) des Rotorkörpers wenigstens eine Dichtungseinrichtung (9) integriert ist.

3. Freilaufnabe (3) nach mindestens einem der vorhergehenden Ansprüche, **dadurch gekennzeichnet, dass** wenigstens ein Gleitlager (31) selbstschmierend ist.

4. Freilaufnabe (3) nach mindestens einem der vorhergehenden Ansprüche, **dadurch gekennzeichnet, dass** wenigstens ein Gleitlager (31) ein Kunststoffgleitlager ist.

5. Freilaufnabe (3) nach mindestens einem der vorhergehenden Ansprüche, **dadurch gekennzeichnet, dass** wenigstens ein Gleitlager (31) wenigstens teilweise ein Material aufweist, das einer Gruppe von Materialien entnommen ist, welche faserverstärkten Kunststoff, Polytetrafluorethylen, ultrahochmolekulares Niederdruck-Polyethylen, Polyamid und dergleichen enthält.

6. Freilaufnabe (3) nach mindestens einem der vorhergehenden Ansprüche, **dadurch gekennzeichnet, dass** die Bauteile (5a, 5b) des Rotorkörpers als im Wesentlichen zylinderförmige Ringe ausgestaltet sind.

7. Freilaufnabe (3) nach mindestens einem der vorhergehenden Ansprüche, **dadurch gekennzeichnet, dass** wenigstens zwei Bauteile (5a, 5b) des Rotorkörpers kraft- und/oder form- und/oder stoffschlüssig verbunden sind.

8. Freilaufnabe (3) nach mindestens einem der vorhergehenden Ansprüche, **dadurch gekennzeichnet, dass** wenigstens ein Bauteil (5a, 5b) des Rotorkörpers mit einem Außengewinde versehen ist zur schraubbaren Verbindung mit wenigstens einem mit Innengewinde versehenen anderen Bauteil (5b, 5a) des Rotorkörpers.

9. Freilaufnabe (3) nach mindestens einem der vorhergehenden Ansprüche, **dadurch gekennzeichnet, dass** wenigstens das erste Bauteil (5a) des Rotorkörpers ein Material hoher Festigkeit aufweist.

10. Freilaufnabe (3) nach mindestens einem der vorhergehenden Ansprüche, **dadurch gekennzeichnet, dass** das Material des ersten Bauteils (5a) einer Gruppe von Materialien entnommen ist, welche Stahl, Stahlegierungen, gehärteten Stahl, Titan und dergleichen enthält.

11. Freilaufnabe (3) nach mindestens einem der vorhergehenden Ansprüche, **dadurch gekennzeichnet, dass** das zweite Bauteil (5b) des Rotorkörpers ein Material geringen spezifischen Gewichts aufweist.

12. Freilaufnabe (3) nach mindestens einem der vorhergehenden Ansprüche, **dadurch gekennzeichnet, dass** das Material des zweiten Bauteils (5b) einer Gruppe von Materialien entnommen ist, welche Leichtmetalle, Aluminium, Aluminiumlegierungen, Magnesium und dergleichen enthält.

13. Freilaufnabe (3) nach mindestens einem der vorhergehenden Ansprüche, **dadurch gekennzeichnet, dass** das erste Bauteil (5a) des Rotorkörpers auf der Innenumfangsfläche wenigstens eine axiale Nut zum Eingriff mit den Sperrklinken (23) der Freilaufeinrichtung aufweist.

14. Freilaufnabe (3) nach mindestens einem der vorhergehenden Ansprüche, **dadurch gekennzeichnet, dass** das erste Bauteil (5a) des Rotorkörpers auf der Außenumfangsfläche wenigstens eine radiale Nut. (45) aufweist.

15. Freilaufnabe (3) nach mindestens einem der vorhergehenden Ansprüche, **dadurch gekennzeichnet, dass** wenigstens eine Labyrinthdichtung (43) vorgesehen ist.
